# EUROPÄISCHE PATENTSCHRIFT

(11) **EP 1 937 512 B1**
(45) Veröffentlichungstag und Bekanntmachung des Hinweises auf die Patenterteilung: **19.08.2015**
(21) Anmeldenummer: 06775917.5
(22) Anmeldetag: 01.09.2006
(51) Int. Cl.: B60R 13/08

(54) **VERWENDUNG EINES FLÄCHIGEN MEHRSCHICHTVERBUNDSYSTEMS ALS BAUTEIL IM MOTORINNENRAUM EINES KRAFTFAHRZEUGS**
USE OF A FLAT MULTI-LAYERED COMPOSITE SYSTEM AS A COMPONENT IN THE INNER CAVITY OF A MOTOR OF A MOTOR VEHICLE
UTILISATION D'UN SYSTEME COMPOSITE MULTICOUCHE PLAT COMME COMPOSANT DANS L'ESPACE MOTEUR D'UN VEHICULE AUTOMOBILE

(30) Priorität: 17.10.2005 DE 102005049911
(43) Veröffentlichungstag der Anmeldung: 02.07.2008
(73) Patentinhaber: WOCO Industrietechnik GmbH, 63628 Bad Soden-Salmünster (DE)
(72) Erfinder: WEIGEL, Jürgen, 36103 Flieden (DE); ZÄNGERLE, Horst, 63628 Bad Soden-Salmünster (DE); GOTTSCHALK, Anja, 63654 Büdingen (DE)
(74) Vertreter: Weber-Bruls, Dorothée
(86) Internationale Anmeldenummer: PCT/DE2006/001538
(87) Internationale Veröffentlichungsnummer: WO 2007/045195

(56) Entgegenhaltungen:
- EP-A- 1 619 020
- DE-A1-102004 007 602
- DE-B3- 10 247 641
- DE-U1- 29 614 430
- FR-A- 2 852 901
- US-A- 5 745 434
- US-A1- 2004 007 421
- US-A1- 2004 142 152

## Beschreibung

Die vorliegende Erfindung betrifft die Verwendung eines Verfahrens gemäß einem der Ansprüche 1 bis 4 zur Herstellung eines flächigen Mehrschichtverbundsystems zur Verwendung als Bauteil oder als Bauteilkomponente im Motorinnenraum eines Kraftfahrzeugs gemäß dem Patentanspruch 5 sowie ein Verfahren zur Herstellung eines solchen Mehrschichtverbundsystems nach dem Patentanspruch 1.

Neben einer ansprechenden Gestaltung der Karosserie und dem Design des Innenraums eines Kraftfahrzeugs gewinnt die optische Gestaltung des Motorinnenraums zunehmend an Bedeutung. Durch geeignete optische Stilelemente soll auch in diesem Bereich ein hochwertiger, exklusiver Eindruck vermittelt werden. Darüber hinaus sollen Motorinnenraumbauteile häufig eine Schallschutz- und eine Hitzeschildfunktion übernehmen, und zwar unabhängig von der jeweiligen Bauteilgröße. Geeignete Bauteile haben dabei in der Weise gestaltet zu sein, dass eine hochwertige Optik auch unter aggressiven thermischen und mechanischen Bedingungen, selbst bei Dauerbelastung, nicht verloren geht.

Derzeitige Lösungen favorisieren hinterspritzte Mehrschichtfoliensysteme mit einer in metallischer Farbe eingefärbten Deckschicht aus einem polymeren Material (s.a. Folienhinterspritzen geht unter die Haube, G. Fischer und M. Wilmsen, Kunststoffberater 2/2002, 45. Jahrgang, Giesel Verlang, Isernhagen). Derartige Mehrschichtfoliensysteme, wie das sogenannte PFM<(RTM)>-System der BASF, sind z.B. der DE 103 06 358 A1 und DE 199 28 774 A1 zu entnehmen. Hierbei wird üblicherweise ein Foliensystem, umfassend eine Folienträgerschicht, beispielsweise aus einem Styrolcopolymeren, eine eingefärbte Polymethylmethacrylatdeckschicht und eine Polymethylmethacrylatschutzschicht, mit einem geeigneten Polymermaterial hinterschäumt oder hinterspritzt. Derartige polymere Mehrschichtverbundsysteme sind aber noch stets sehr temperaturempfindlich und finden daher häufig nur bei der Herstellung von Karosserieaußenteilen Verwendung.

Um einen akustisch wirksamen Hitzeschutzschild für den Motorinnenraum zu erhalten, ist gemäß der DE 102 39 631 A1 eine feuerhemmende Beschichtung zu wählen, die sich zusammensetzt aus 40 bis 90 Gew.-% eines keramischen Klebstoffs, 5 bis 50 Gew.-% an keramischen Mikrohohlkugeln mit einer Korngröße im Bereich von 0,1 bis 3 mm und 0,1 bis 10 Gew.-% eines unter Wärmeeinwirkung expandierenden Treibmittels. Dieses Isolierbauteil liegt vorzugsweise auf einer Schaumstofflage aus offenporigem Melaminharzschaum vor, welche mit einer sogenannten Sperrschicht eines thermoplastischen Polymers hinterspritzt ist. Derartige Systeme sind komplex im Aufbau, aufwendig herzustellen und liefern ein optisch nicht sehr hochwertiges Erscheinungsbild.

Ein eine Dekorschicht aufweisendes Trennwandmodul für den Innenraum eines Kraftfahrzeugs hat gemäß der DE 20 2004 011 483 U1 eine bedruckte Folie als Dekorschicht und eine mittels Hinterpressens gefertigte glasfaser- oder langfaserverstärkte Thermoplastschicht zu umfassen. Diesem Dokument sind keine Hinweise auf mögliche Anwendungen im Motorinnenraum zu entnehmen.

Aus der DE 100 14 046 A1 geht ein Schichtverbundmaterial aus einer thermoplastischen Trägerlage, einer darauf angeordneten Zwischenlage und einer auf dieser Zwischenlage aufgebrachten Dekorschicht hervor. Die Dekorschicht hat aus einem verchromten Metall zu bestehen. Optional kann auf der Dekorschicht aus verchromtem Metall eine hitzegehärtete Schicht aufgebracht sein. Gemäß der DE 100 14 046 A1 gelingt eine dreidimensionale Verformung der Dekorschicht vorteilhafterweise nach vorangegangener Wärmebehandlung bei Temperaturen im Bereich von 150 bis 300 °C Derartige Verbundsysteme sollen mit Hilfe des Spritzgießens bzw. Hinterspritzens zugänglich sein. Die DE 100 14 046 A1 schlägt allerdings für die beschriebenen Schichtverbundmaterialien durchgehend kleinteilige Bauteilanwendungen vor. Es werden eine Toast-Haube, ein lichtdichtes Gehäuse für eine elektrische Zahnbürste, der Aufbau eines bruchsicheren Spiegels, der Aufbau eines Gehäuses/Reflektors für Leuchten und der Aufbau eines elektromagnetisch abgeschirmten Gehäuses beschrieben. Weitergehend findet sich in diesem Dokument allenfalls der Hinweis, dass die offenbarten Schichtverbundmaterialien als isolierendes Teil eines Haushaltsgeräts, eines Möbelstücks oder eines Formteils in der Elektro-, Bau- oder Automobilindustrie oder im Gesundheitsbereich eingesetzt werden können. Zusätzliche Angaben sind diesem Dokument an keiner Stelle zu entnehmen.

Ferner beschreibt die DE 10 2004 007 602 A1 ein Verfahren zur Herstellung einer Abdeckung für einen Verbrennungsmotor eines Kraftfahrzeugs, gemäß dem Oberbegriff des Anspruchs 1 und auch die Verwendung einer solchen Abdeckung gemäß Patentanspruch 5. Es wird vorgeschlagen, dass ein Schalldämmungselement der Abdeckung einen Verbrennungsmotor freitragend überspannt und entlang seines äußeren Randes von einem als Trägerelement ausgeformten Kunststoffmaterial umgeben ist.

Ein weiteres gattungsgemäßes Mehrschichtverbundsystem bzw. eine gattungsgemäße Verwendung ist auch aus der US 2004/007421 A1, die eine Motorabdeckung offenbart, bekannt. Es wird vorgeschlagen, dass die Abdeckung einen steifen Abdeckungskörper umfasst und ein Schaumkörper an einer inneren Oberfläche des Abdeckungskörpers angeordnet ist. Dieser ist zumindest bereichsweise von dem Verbrennungsmotor beabstandet und eine Vielzahl von Erhebungen ist in dem Schaumstoffkörper ausgebildet.

Weitere Mehrschichtsysteme sind aus der DE 296 14 430 U1, die ein Sandwichbauteil offenbart, der US 5,745,434 A, die ein akustisches Absorptions- oder Dämpfungsmaterial mit integrierter viskoser Dämpfung offenbart, als auch der EP 1 619 020 A1, die ein Versteifungselement offenbart, bekannt.

Der vorliegenden Erfindung lag daher die Aufgabe zugrunde, Bauteile zu finden, die für den Motorinnenraum geeignet sind, wärme- und/oder schallisolierend wirken und darüber hinaus auch unter Dauerbelastung eine qualitativ äußerst hochwertig anmutende Optik bereitstellen.

Diese Aufgabe wird erfindungsgemäß durch die kennzeichnenden Merkmale der Patentansprüche 1 und 5 gelöst.

Hierbei ist insbesondere vorgesehen, dass das Bauteil eine Akustikabdeckung, eine Designabdeckung, eine Ladeluftleitung, eine Zylinderkopfabdeckung, eine Reinluftleitung, einen Resonator, eine Elektroleitungummantelung, eine Ansauganlage oder einen Luftfilterkasten oder eine Komponente hiervon darstellt.

Insbesondere bevorzugt ist, dass die die Trägerschicht bildenden geschäumten oder ungeschäumten duroplastischen, thermoplastischen oder elastomeren Polymere mit Fasern- und/oder Füllstoffen verstärkt sind. Geeignete Füllstoffe umfassen z.B. Bariumsulfat, Magnesiumhydroxid, Talkum, Flachs, Kreide und Mischungen hiervon. Unter den geeigneten Fasern seien Glasfasern, beschichtete Glasfasern, Lang- und Kurzglasfasern, Glaskugeln und deren Mischungen genannt. Selbstverständlich kann das Material der Trägerschicht übliche Zusatzstoffe wie Licht-, UV- und Wärmestabilisatoren, Pigmente, Ruße, Gleitmittel, Flammschutzmittel und/oder Treibmittel enthalten. Selbstverständlich können die Trägerschichten auch unverstärkt bzw. ohne irgendein Füllstoffmaterial eingesetzt werden, ohne dass konkreten Anwendungen hierdurch Beschränkungen auferlegt würden.

Als thermoplastische Polymere kommen für die Trägerschicht beispielsweise Polypropylen, Polyethylen, Polyvinychlorid, Polysulfone, Polyetherketone, Polyester, Polycycloolefine, Polyarcylate und Polymethacrylate, Polyamide, Polycarbonat, Polyurethane, Polyacetale, z. B. POM, Polybutylenterephthalate, Polystyrole, Polyphenylenether und Styrolcopolymere, wie ABS, ASA und SAN, in Betracht. Die vorangehend genannten thermoplastischen Polymere, auch in faserverstärkter bzw. füllstoffhaltiger Form, sind dem Fachmann hinlänglich bekannt und kommerziell erhältlich. Besonders bevorzugt wird für die Trägerschicht auf Polyolefine wie Polyethylen und insbesondere Polypropylen zurückgegriffen. Im Sinne der vorliegenden Erfindung umfasst die Bezeichnung Polypropylen sowohl Homo- als auch Copolymere des Propylens. Für die Herstellung von beispielsweise Polypropylen kann sowohl auf Ziegler-Natta-Katalysatorsysteme als auch auf solche auf der Basis von Metallocenverbindungen zurückgegriffen werden.

Die Herstellung geschäumter Thermoplaste ist dem Fachmann hinlänglich bekannt. Exemplarisch sei auf die DE 1 669 733 US sowie die DE 698 23 091 D2 verwiesen.

Als duroplastische Polymere kommen beispielsweise solche in Betracht, die durch Polykondensation von Formaldehyd-Formmassen, z.B. Harnstoff-Formaldehyd, erhalten werden. Ferner geeignet sind ungesättigte Polyesterharze, Epoxidharze, Phenolharze, Aminoplastharze, Polyurethanharze, Melaminharze, beispielsweise Melamin-Phenolharz-, Melamin-Polyesterharz- und Melamin-Formaldehyd-Formstoffe, Siliconharze und Vinylesterharze, beispielsweise Phenylacrylatharze und Vinylesterurethane.

Für die Herstellung geschäumter duroplatischer Polymere kann auf bekannte Verfahren zurückgegriffen werden. Die Herstellung erfolgt beispielsweise in Gegenwart von physikalischen oder chemischen Treibmitteln.

Geeignete elastomere Polymere umfassend beispielsweise natürliche und synthetische Kautschuke sowie Polymerisate aus konjugierten Dienen, z.B. Isopren, Butadien oder Chlor-Butadien, sowie Copolymerisate aus konjugierten Dienen und Vinylderivaten, wie Styrol und Acrylnitril. Exemplarisch seinen Naturkautschuk, Isoprenkautschuk, Butadienkautschuk, Chloroprenkautschuk, Styrolbutadienkautschuk (SBR), Nitrilbutadienkautschuk (NBR), auch in hydrierter Form, Ethylen-Propylen-(Dien)-Kautschuk (EPM, EPDM), Ethylenvinylacetat-Kautschuk und Silikon- sowie Flüssigsilikonkautschuk genannt. Ferner sind als elastomere Polymere die zur Klasse der thermoplastischen Elastomere gehörenden Substanzen mit umfasst. Hierbei handelt es sich im allgemeinen um Pfropf- oder Copolymere mit thermoplastischen und elastomeren Sequenzen, die miteinander im allgemeinen unverträglich sind und sich demgemäß lokal entmischen. Hierbei bilden sich harte thermoplastische Sequenzblöcke, die in einer kontinuierlichen Matrix aus weichen Elastomersequenzen vorliegen. Diese weichen Elastomerensequenzen befinden sich im allgemeinen bei Gebrauchstemperatur oberhalb ihrer Glastemperatur, die harten thermoplastischen Sequenzen hingegen unterhalb ihrer Glas- bzw. Schmelztemperatur.

Thermoplastische Polyamidelastomere umfassen beispielsweise Blockcopolymere mit harten Polyamidblöcken und weichen Polyether- und/oder Polyesterblöcken. Thermoplastische Copolyesterelastomere basieren im allgemeinen auf Blockcopolymeren aus Weichsegmenten aus Polyalkylenetherdiolen und/oder langkettigen aliphatischen Dicarbonsäureestern mit teilkristallinen Polybutyleneterephthalatsegmenten. Bei Polyolefinelastomeren handelt es sich zumeist um Blends auf der Basis von isotaktischem Polypropylen und Ethylen-Propylen-Kautschuken (EPDM). Bei thermoplastischen Polystyrolelastomeren (TPS), üblicherweise mittels anionischer Polymerisation hergestellt, liegen Blöcke aus Styrol und Butadien sowie gegebenenfalls nochmals aus Styrol vor. Thermoplastische Polyurethanelastomere können durch Polyaddition langkettiger Diole, wie 1,4-Butandiol oder 1,6-Hexandiol, Polyetherdiolen, Polyesterdiolen oder Polycarbonatdiolen, mit aliphatischen Diisocyanaten, beispielsweise HDI oder IPDI, gewonnen werden. Die Herstellung geschäumter Elastomere bzw. geschäumter thermoplastischer Elastomere ist dem Fachmann hinlänglich bekannt, beispielsweise aus der EP 406 227 A2.

Die Trägerschicht wird erfindungsgemäß durch Hinterschäumen, Hinterspritzen oder thermisches Verpressen mit der Metallschicht erhalten werden. Besonders bevorzugt ist hierbei, das flächige Mehrschichtverbundsystem mittels Hinterspritzen mit, insbesondere faser- und/oder füllstoffhaltigen, thermoplastischen Polymeren herzustellen.

Die Unteransprüche 2 bis 4 sowie 6 bis 15 beschreiben vorteilhafte Ausbildungen der Erfindung.

Indem mit einer dreidimensional strukturierten Metallschicht gearbeitet wird, kann diese sowohl über Segmente verfügen, die dem Motorinnenraum zugewandt sind, als auch solche, die auf der dem Motorinnenraum abgewandten Seite der Trägerschicht angebracht vorliegen. Für diese Ausführungsform kann beispielsweise auf ein einstückiges Metallbauteil zurückgegriffen werden. Alternativ kann selbstverständlich auch mit zweien oder einer Vielzahl an Metallschichtbauteilen gearbeitet werden. Diese sind dann je nach funktioneller Erforderlichkeit unterhalb, d.h. dem Motorinnenraum zugewandt, oder oberhalb der Trägerschicht anzubringen. Auf diese Weise wird nicht nur dem Designer ein hohes Maß an Gestaltungsfreiheit ermöglicht, sondern es kann auch allen technischen Erfordernissen in vollem Umfang Rechnung getragen werden.

Die Designvielfalt bzw. -freiheit, die das flächige Mehrschichtverbundsystem der vorliegenden Erfindung zulässt, ermöglicht erstmalig auch sehr anspruchsvolle, komplexe Anwendungen im Motorinnenraum zu verwirklichen. Beispielsweise ist es nicht nur möglich, ohne weiteres Schriftzüge, Logos oder andere konturenscharfe Designelemente kenntlich zu machen, sondern gleichzeitig kann das Mehrschichtverbundsystem als Schallschutz und auch Hitzeschild dienen. Diese Funktionen werden bislang nur durch jeweils separat hierfür vorgesehene Bauteile erfüllt. So ist es jetzt unter anderem möglich, eine Motorabdeckung zur Verfügung zu stellen, die sowohl auf der Sichtseite eine Metallschicht aufweist, vorzugsweise designerisch ausgeformt, als auch auf der Rückseite, wo sie als Hitzeschild dient. Dabei können ober- und unterseitige Metallschichten in einer Ausführungsform beidseitig auf der Trägerschicht vorliegen. In einer weiteren Ausgestaltung können ober- und unterseitig vorliegende Metallschichten überhaupt keine überlappenden Bereiche aufweisen. Selbstverständlich sind auch teilweise überlappende Bereiche von oben- und unterseitig auf einer Trägerschicht angebrachten Metallschichten möglich.

Gemäß einer weiteren, bevorzugten Ausführungsform umfasst die Trägerschicht nebeneinander geschäumte oder ungeschäumte thermoplastische, duroplastische und/oder elastomere Segmente, z.B. thermoplastische und geschäumte duroplastische Segmente. Während die geschäumten Segmente der Trägerschicht beispielsweise in solchen Bereichen mit der Metallschicht verbunden sind, die in besonderem Maße Schall absorbieren sollen, kann das ungeschäumte thermoplastische Segment der Trägerschicht konstruktive Funktion übernehmen.

Ein weiterer Vorteil der im Sinne der vorliegenden Erfindung eingesetzten flächigen Mehrschichtverbundsysteme ergibt sich dadurch, dass die hieraus hervorgehenden Bauteile im Motorinnenraum unproblematisch und trotzdem zuverlässig eingebaut werden können, beispielsweise mit Hilfe von Klippverbindungen. Aufwendige Schraub- oder Nietverbindungen können somit entfallen.

Insbesondere wenn sehr ausgeprägte erhabene oder eingelassene Bereiche gefordert werden, hat es sich als vorteilhaft erwiesen, die Metallschicht vor dem Hinterspritzen, Hinterschäumen oder Hinterprägen in einem separaten Arbeitsgang vorzuprägen. Dieses kann beispielsweise auch in dem Hinterspritz-, Hinterschäum- oder Hinterprägewerkzeug geschehen.

Für die Metallschicht kann auf alle gängigen Metalle zurückgegriffen werden, beispielsweise Edelstahl, Eisen, Kupfer, Nickel, Zinn, Zink oder Legierungen dieser Metalle.

Die Metallschicht weist üblicherweise eine Dicke im Bereich von 0,1 bis 1,5 mm auf. Demgemäß kann auf alle geeigneten Metallbleche und Metallfolien, insbesondere auch Aluminiumfolien, zurückgegriffen werden. Ferner seien als konkrete Anwendungen ebenfalls Stahl- bzw. Edelstahlbleche und Kupferfolien genannt. Selbstverständlich kommen insbesondere für anspruchsvolle Designanwendungen auch verchromte Metallschicht oder solche mit einem chromähnlichen Erscheinungsbild in Betracht.

Ökologisch vorteilhaft ist, dass für die Trägerschicht ohne weiteres auch auf Rezyclate, zumindest anteilig, zurückgegriffen werden kann.

Eine Weiterentwicklung der vorliegenden Erfindung sieht ferner vor, dass die Metallschicht zumindest bereichsweise mindestens eine Schutzschicht aufweist. Hierbei kann es sich beispielsweise um eine hitzegehärtete Schicht handeln. Als Materialien hierfür kommen unter anderem Acrylharze, Phenolharze, Melaminharze und Harnstoffharze, beispielsweise in Form eines mit diesem Material getränkten Papiers, das durch Druck- und Hitzeeinwirkung während der Herstellung des Schichtverbundmaterials vernetzt wird, in Betracht. Für die erfindungsgemäße Anwendung kann die Schutzschicht ohne weiteres sehr selektiv und damit materialsparend aufgebracht werden. Beispielsweise reicht zur Temperaturabschirmung die Metallschicht als solche bereits völlig aus.

Insbesondere um die Anbindung zwischen der Trägerschicht und der Metallschicht zu erhöhen, kann zwischen diesen eine Haftschicht als Zwischenlage vorgesehen sein. Als Materialen für diese Haftschicht kommen z.B. die bereits vorangehenden beschriebenen thermoplastischen Polymere in Frage. Besonders bevorzugt sind Polypropylen, Polyethylen, Styrolcopolymere, Polyoxymethylen und Polybutylenterephthalat.

Das beschriebene Mehrschichtverbundsystem weist üblicherweise eine Dicke im Bereich von 1 bis 4 mm auf. Selbstverständlich lassen sich auch ohne weiteres Dicken im Bereich von 1 bis 3 mm realisieren.

Der vorliegenden Erfindung lag die überraschende Erkenntnis zugrunde, dass die geschilderten flächigen Mehrschichtverbundsysteme, enthaltend eine polymere Trägerschicht und eine Metallschicht in Form einer Folie oder eines Metallblechs, als Bauteile bzw. Bauteilkomponenten für alle gängigen Anwendungen im Motorinnenraum eingesetzt werden können und hierbei gleichzeitig höchstens gestalterischen und auch Hitze- und Schallschutzanforderungen genügen. Insbesondere entfällt die Notwendigkeit, optisch hochwertige Motorinnenraumbauteile mittels eines vielstufigen, kostenintensiven und ökologisch unvorteilhaften Lackierprozesses zu erhalten. Weiterhin hat sich als besonders vorteilhaft erwiesen, dass sich die geschilderten Mehrschichtverbundsysteme, insbesondere auch wenn großteilig vorliegend, auf einfache Weise anbringen und befestigen lassen, beispielsweise über Klippverbindungen.

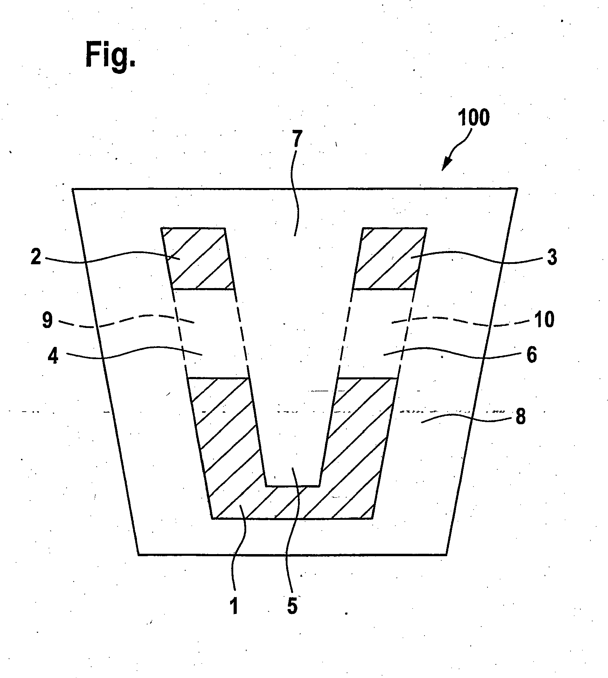

Weitere Details und Vorteile der vorliegenden Erfindung gehen aus der nachfolgenden Beschreibung der in der beiliegenden Abbildung wiedergegebenen Ausführungsform hervor. Die Abbildung zeigt ein flächiges Mehrverbundsystem in der erfindungsgemäßen Anwendung einer Motorabdeckung.

Die Motorabdeckung 100 verfügt auf ihrer Oberseite über Bereiche 1, 2 und 3, die auf eine Metallschicht zurückgehen. Die zwischen diesen Bereichen und auch außerhalb derselben vorliegenden Areale 4, 5, 6, 7 und 8 werden durch das thermoplastische Material der Trägerschicht ausgefüllt und liegen mit ihrer Oberfläche in etwa auf der gleichen Höhe wie die Bereiche der Metallschicht vor. Zusätzlich liegt das Material der Trägerschicht auch unterhalb der Metallschichtbereiche 1, 2 und 3 und flächig verbunden mit diesen vor. Das abgebildete Bauteil wird mittels der Hinterspritztechnologie erhalten. Metallische Bereiche 9 und 10 (durch gestrichelte Linien angedeutet) liegen ferner auf der Unterseite der Trägerschichtbereiche 4 und 6 vor. Somit bilden die Bereiche 1, 2, 3, 9 und 10 ein durchgängiges Metallbauteil. Anders als bei herkömmlichen Motorabdeckungen kann die Abdeckung 100 im wesentlichen in einem einzigen Verfahrensgang hergestellt werden kann. Allenfalls besonders stark konturierte Designelemente sind mittels Vorprägens der Metallschicht vorzubereiten.

Die in der vorstehenden Beschreibung, in der Zeichnung sowie in den Ansprüchen offenbarten Merkmale der Erfindung können sowohl einzeln, als auch in jeder beliebigen Kombination für die Verwirklichung der Erfindung in ihren verschiedenen Ausführungsformen wesentlich sein.

## Patentansprüche

1. Verfahren zur Herstellung eines flächigen Mehrschichtverbundsystems, umfassend mindestens eine Trägerschicht aus mindestens einem geschäumten oder ungeschäumten thermoplastischen, duroplastischen oder elastomeren Polymeren mit einer ersten Oberfläche und einer dieser ersten Oberfläche gegenüberliegenden zweiten Oberfläche und mindestens eine mit der ersten und/oder zweiten Oberfläche der Trägerschicht zumindest bereichsweise haftend verbundene Metallschicht, **dadurch gekennzeichnet, dass** zwischen der Trägerschicht und der Metallschicht zumindest bereichsweise mindestens eine Haftschicht vorliegt, wobei das Mehrschichtverbundsystem mittels Hinterspritzen, Hinterschäumen oder Hinterprägen erhalten wird.

2. Verfahren nach Anspruch 1, **dadurch gekennzeichnet, dass** das Mehrschichtverbundsystem ein Bauteil im Motorinnenraum eines Kraftfahrzeugs oder eine Komponente eines solchen Bauteils darstellt.

3. Verfahren nach Anspruch 2, **dadurch gekennzeichnet, dass** das Mehrschichtverbundsystem eine Akustikabdeckung, eine Designabdeckung, eine Ladeluftleitung, eine Zylinderkopfhaube, eine Reinluftleitung, einen Resonator, eine Elektroleitungsummantelung, eine Ansauganlage, einen Luftfilterkasten oder eine Komponente hiervon darstellt.

4. Verfahren nach einem der Ansprüche 1 bis 3, **dadurch gekennzeichnet, dass** die Metallschicht eine Metallfolie oder ein Metallblech darstellt.

5. Verwendung eines Verfahrens nach einem der Ansprüche 1 bis 4 zur Herstellung eines flächigen Mehrschichtverbundsystems zur Verwendung als Bauteil im Motorinnenraum eines Kraftfahrzeugs oder als Komponente eines solchen Bauteils.

6. Verwendung nach Anspruch 5, **dadurch gekennzeichnet, dass** das Mehrschichtverbundsystem mittels Hinterspritzen, Hinterschäumen oder Hinterprägen mit einem thermoplastischen Polymer erhalten wird.

7. Verwendung nach Anspruch 5 oder 6, **dadurch gekennzeichnet, dass** das Mehrschichtverbundsystem über eine Metallschicht verfügt, die erhabene und/oder eingelassene Bereiche aufweist.

8. Verwendung nach einem der Ansprüche 5 bis 7, **dadurch gekennzeichnet, dass** das duroplastische, elastomere oder das thermoplastische Polymere der Trägerschicht ein faserverstärktes und/oder Füllstoff enthaltendes Polymer umfasst.

9. Verwendung nach einem der Ansprüche 5 bis 8, **dadurch gekennzeichnet, dass** die Dicke des Mehrschichtverbundsystems im Bereich von etwa 1 bis 4 mm liegt.

10. Verwendung nach einem der Ansprüche 5 bis 7, **dadurch gekennzeichnet, dass** die Metallschicht vor dem Hinterspritzen, Hinterschäumen oder Hinterprägen vorgeprägt worden ist.

11. Verwendung nach einem der Ansprüche 5 bis 10, **dadurch gekennzeichnet, dass** die Metallschicht ein Metallblech oder eine Metallfolie, insbesondere eine Aluminiumfolie, darstellt.

12. Verwendung nach einem der Ansprüche 5 bis 11, **dadurch gekennzeichnet, dass** die Trägerschicht Rezyklat umfasst.

13. Verwendung nach einem der Ansprüche 5 bis 12, **dadurch gekennzeichnet, dass** die Metallschicht zumindest bereichsweise mindestens eine Schutzschicht umfasst.

14. Verwendung nach einem der Ansprüche 5 bis 13, **dadurch gekennzeichnet, dass** die Metallschicht eine Dicke im Bereich von 0,1 bis 1,5 mm aufweist.

15. Verwendung nach einem der Ansprüche 5 bis 14, **dadurch gekennzeichnet, dass** das Bauteil eine Akustikabdeckung, eine Designabdeckung, eine Ladeluftleitung, eine Zylinderkopfhaube, eine Reinluftleitung, einen Resonator, eine Elektroleitungsummantelung, eine Ansauganlage oder einen Luftfilterkasten oder eine Komponente hiervon darstellt.

## Claims

1. A method for manufacturing a flat multi-layered composite system, comprising at least one substrate layer of at least one foamed or unfoamed thermoplastic, thermosetting or elastomeric polymer having a first surface and a second surface opposite said first surface and at least one metal layer at least locally adhesively connected to the first and/or second surface of the substrate layer, **characterised in that** at least one adhesive connection is present between the substrate layer and the metal layer at least locally, wherein the multi-layered composite system is obtained by means of back injection, back foaming or back compression.

2. The method according to claim 1, **characterised in that** the multi-layered composite system represents a component in the inner cavity of the motor of a motor vehicle or an element of such a component.

3. The method according to claim 2, **characterised in that** the multi-layered composite system represents an acoustic cover, a design cover, a charge air conduit, a cylinder head cover, a clean air conduit, a resonator, a sheathing for electrical cables, an intake system, an air filter box or an element thereof.

4. The method according to any one of claims 1 to 3, **characterised in that** the metal layer represents a metal foil or a metal sheet.

5. Use of a method according to any one of claims 1 to 4 for manufacturing a flat multi-layered composite system for use as a component in the inner cavity of the motor of a motor vehicle or as an element of such a component.

6. The use according to claim 5, **characterised in that** the multi-layered composite system is obtained by means of back injection, back foaming or back compression with a thermoplastic polymer.

7. The use according to claim 5 or 6, **characterised in that** the multi-layered composite system has a metal layer having raised and/or recessed regions.

8. The use according to any one of claims 5 to 7, **characterised in that** the thermosetting, elastomeric or the thermoplastic polymer of the substrate layer comprises a fibre-reinforced polymer and/or a polymer containing a filler.

9. The use according to any one of claims 5 to 8, **characterised in that** the thickness of the multi-layered composite system is within the range of approximately 1 to 4 mm.

10. The use according to any one of claims 5 to 7, **characterised in that** the metal layer has been pre-embossed prior to back injection, back foaming or back compression.

11. The use according to any one of claims 5 to 10, **characterised in that** the metal layer represents a metal foil or a metal sheet, in particular an aluminium foil.

12. The use according to any one of claims 5 to 11, **characterised in that** the substrate layer comprises a recyclate.

13. The use according to any one of claims 5 to 12, **characterised in that** the metal layer comprises at least one protective layer at least locally.

14. The use according to any one of claims 5 to 13, **characterised in that** the metal layer has a thickness within the range of 0.1 to 1.5 mm.

15. The use according to any one of claims 5 to 14, **characterised in that** the component represents an acoustic cover, a design cover, a charge-air conduit, a cylinder-head cover, a clean-air conduit, a resonator, a sheathing for electrical cables, an intake system or an air filter box or an element thereof.

## Revendications

1. Procédé de fabrication d'un système composite multicouche de forme plate, comprenant au moins une couche de support constituée d'au moins un polymère thermoplastique, duroplastique ou élastomérique, expansé ou non expansé, et présentant une première surface et une seconde surface opposée à la première surface et au moins une couche métallique reliée par adhérence, au moins sur certains segments, à la première et/ou à la seconde surface de la couche de support, **caractérisé par**
au moins une couche adhésive présente entre la couche de support et la couche de métal au moins par endroits, de sorte que le système composite multicouche est obtenu par injection au verso, moussage au verso, ou gaufrage au verso.

2. Procédé selon la revendication 1, **caractérisé en ce que** le système composite multicouche représente une pièce dans l'espace intérieur de moteur d'un véhicule automobile, ou un composant d'une telle pièce.

3. Procédé selon la revendication 2, **caractérisé en ce que** le système composite multicouche représente un recouvrement acoustique, un recouvrement stylisé, une conduite d'air de charge, un couvercle de culasse, une conduite d'air propre, un résonateur, une gaine de câble électrique, un système d'admission, une boîte de filtre à air ou un composant de ceux-ci.

4. Procédé selon l'une quelconque des revendications 1 à 3, **caractérisé en ce que** la couche métallique représente une feuille métallique ou une tôle métallique.

5. Utilisation d'un procédé selon l'une quelconque des revendications 1 à 4 pour la fabrication d'un système composite multicouche de forme plate destiné à être utilisé en tant que pièce dans l'espace intérieur de moteur d'un véhicule à moteur, ou comme composant d'une telle pièce.

6. Utilisation selon la revendication 5, **caractérisée en ce que** le système composite multicouche est obtenu par injection au verso, moussage au verso, ou gaufrage au verso avec un polymère thermoplastique.

7. Utilisation selon la revendication 5 ou 6, **caractérisée en ce que** le système multicouche comprend une couche de métal ayant des zones en relief et/ou des zones en creux.

8. Utilisation selon l'une quelconque des revendications 5 à 7, **caractérisée en ce que** le polymère thermodurcissable, élastomérique ou duroplastique de la couche de support comprenant un polymère renforcé par des fibres et/ou contenant une charge.

9. Utilisation selon l'une quelconque des revendications 5 à 8, **caractérisée en ce que** l'épaisseur du système composite multi-couche est dans le domaine d'environ 1 à 4 mm.

10. Utilisation selon l'une quelconque des revendications 5 à 7, **caractérisée en ce que** la couche métallique a été pré-gaufrée avant l'injection au verso, le moussage au verso, ou le gaufrage au verso.

11. Utilisation selon l'une quelconque des revendications 5 à 10, **caractérisée en ce que** la couche métallique est une feuille métallique ou une tôle métallique, en particulier une feuille d'aluminium.

12. Utilisation selon l'une quelconque des revendications 5 à 11, **caractérisée en ce que** la couche de support comprend un matériau recyclé.

13. Utilisation selon l'une quelconque des revendications 5 à 12, **caractérisée en ce que** la couche de métal comprend au moins une couche de protection au moins par endroit.

14. Utilisation selon l'une quelconque des revendications 5 à 13, **caractérisée en ce que** la couche métallique a une épaisseur dans le domaine de 0,1 à 1,5 mm.

15. Utilisation selon l'une quelconque des revendications 5 à 14, **caractérisée en ce que** la pièce représente un recouvrement acoustique, un recouvrement stylisé, une conduite d'air de charge, un couvercle de culasse, une conduite d'air propre, un résonateur, une gaine de câble électrique, un système d'admission, une boîte de filtre à air ou un composant de ceux-ci.
